# EUROPEAN PATENT SPECIFICATION

(11) **EP 4 119 529 B1**
(45) Date of publication and mention of the grant of the patent: **11.06.2025**
(21) Application number: 22190880.9
(22) Date of filing: 17.08.2013
(51) Int. Cl.: C05D 9/00, C05C 7/02, C05C 9/02, A61J 3/00, C05G 5/30, B01J 2/00, B01J 2/22

(54) **MANUFACTURING POLYMER COATED CONTROLLED RELEASE FERTILIZERS**
HERSTELLUNG VON POLYMERBESCHICHTETEN DÜNGEMITTEL MIT KONTROLLIERTER FREISETZUNG
PRODUCTION D'ENGRAIS À LIBÉRATION CONTRÔLÉE ENROBÉS DE POLYMÈRE

(30) Priority: 20.08.2012 US 201261691051 P; 18.02.2013 US 201361766041 P
(43) Date of publication of application: 18.01.2023
(62) Divisional of application: 13831188.1
(73) Proprietor: CoteX Technologies Inc., Sydney, Nova Scotia B1M 1A2 (CA)
(72) Inventor: YADAV, Santosh Kumar, 395418 Surat Gujarat (IN)
(74) Representative: LLR

(56) References cited:
- EP-A1- 1 362 582
- WO-A1-2009/023235
- WO-A1-2010/108948
- US-A1- 2005 242 471

## Description

### BACKGROUND

### Technical field

The embodiments herein generally relate to fertilizers and particularly to polymer coated fertilizers. The embodiments herein more particularly relate to a system and method for manufacturing polymer-coated fertilizers with a controlled release mechanism for plants and crops.

### Description of the Related Art

A fertilizer is an organic or inorganic material of natural or synthetic origin that is added to a soil to supply one or more plant nutrients essential for the growth of the plants. Fertilizers are broadly divided into organic fertilizers (composed of plants or animal matters), or inorganic/commercial fertilizers. Plants absorb the required nutrients only when they are present in a form of easily dissolved chemical compounds. Both the organic and inorganic fertilizers provide the same chemical compounds that are needed. The organic fertilizers provide both macro and micro nutrients. The macro and micro nutrients are released as the organic matter decay. The decay may take months or years. Further the organic fertilizers have lower concentrations of plant nutrients and have the usual problems of economical collection, treatment, transportation and distribution. Inorganic fertilizers are readily dissolved and applied to the soil. The dissolved inorganic fertilizers is readily taken by the plant roots.

Most of the commercially available fertilizers, when applied to the lawns or agricultural crops, dissolve rapidly in the moisture of the soil. Often, such fertilizers dissolve at a rate that exceeds the rate in which it is absorbed by the plants. This causes a number of significant problems. First, the excess fertilizer can leach into the groundwater thereby generating a potentially serious environmental damage. In addition to the above, an excessive concentration of the fertilizers in the vicinity of a plant may result in a burning or damage of the plant roots. Because of these problems, it is often necessary to apply these fertilizers in several light doses throughout the growing season, rather than in a single heavy application. However, the need for repeated applications increases a cost of the labor. At worse, the repeated applications may cause a physical damage to the growing plants because the fertilizer spreading equipment must pass over the plants for several times.

In order to minimize the loss of fertilizer into the environment and to avoid the need for the repeated applications, various slow or controlled release fertilizers have been developed. The U.S. Patent Numbers 4,042,366, 5,147,443, 5,435,821, and 6,231,633 disclose such controlled release fertilizers. These fertilizers are applied at the beginning of the growing season to facilitate a higher release of fertilizer in the initial growing period followed by a slower release or gradual release of fertilizer throughout the growing season. The slow or controlled release fertilizers are widely used on the agriculture crops, home lawns, public lawns, golf courses, home gardens, plant nurseries, and for horticultural crops.

The polymer coated fertilizers are the most technically advanced controlled release fertilizers. Many manufacturing methods are developed and used to produce polymer-coated fertilizers and they are disclosed in the U.S. Patent Numbers 4,019,890, 4,369,055, 5,176,734, 5,211,985, 5,374,292, 5,858,094, 6,338,746, and 8211201. The polymer coated controlled release fertilizers are typically produced by coating a water insoluble semi-permeable polymer layer onto the fertilizer granules. The fertilizer is released over a time period into the soil by diffusion through this semi-permeable coating.

One of the popular methods of manufacturing the polymer-coated fertilizers is by reacting the chemical monomers onto the surface of the granule to form a polymer film. This method is called a reactive layer coating in which a polyurethane polymer is formed. Another popular method of manufacturing the polymer coated fertilizers is by spraying a solution of polymer onto the fertilizer granules and evaporating the solvent thereby forming a polymer film coating. This method is called fluidized bed coating and it requires an expensive solvent and a solvent recovery system.

The most critical aspect of the controlled-release fertilizers is the moisture permeability of the coating, which is affected by the thickness of the coated polymer. The release of fertilizer takes place via diffusion through the coating and the uniformity of the release rate depends on the uniformity of the coating thickness. An uneven coating thickness will have uneven moisture transmission rate and hence the quality of the controlled-release products will also vary.

Another critical shortcoming of the existing coating technologies is that these coating processes spray polymer solution onto a plurality of fertilizer granules which are tumbling and rolling in a random fashion inside a rotary drum or in a vertical column of fluidized bed. The uneven shaped granules produce completely random rolling pattern thus the coating cannot be directed and this results into an uneven coating thickness. This problem worsens when the shape is extremely uneven or non-spherical such as the fertilizer products made by compaction process, which have highly uneven shape. Thus all existing coating technologies require expensive premium grade round fertilizer granule with smooth surfaces (US 6139597 A and US6039781 A) so that non-uniformity of the coating can be minimized.

The disadvantages suffered by the existing process are that either these methods are polymer specific such as polyurethane processes or the process requires an expensive solvent to produce the coating in case of fluidized bed coating. All these methods produce the products that are very expensive and sometimes the cost is equal to 4-6 times the prices of the conventional fertilizers. The primary reason for the expensive nature is the use of expensive polymers or the use of an expensive solvent or both. Yet another disadvantage is that most of these manufacturing processes are batch type processes, which are expensive.

Another disadvantage with the existing processes is that they require multiple applications of polymer to increase the thickness of the polymer coating around the fertilizer, as disclosed in US Patent 7018441 B2. For example, it requires nearly 16 applications of the polyurethane polymer to achieve a coating thickness of 8%. A coating thickness 0.5% only is achieved in each application and hence more time and energy are required for multiple applications thereby increasing the production cost.

Yet another disadvantage of the existing coating technologies is that the fertilizer granules with lower compression or crushing strength cannot be coated due to turbulence in the coating system.

A manufacturing process is disclosed in the US patent 8211201 (also WO 2009/023235) to overcome the above-mentioned disadvantages. But one disadvantage of this process is the use of molten fertilizer as a feed to produce the coated fertilizers thereby leaving a majority of fertilizer granules including fertilizers in tablet, spikes, pellet, or briquette form. The melting and solidifying of the fertilizer granules requires a substantial amount of energy, which increase the production cost and many fertilizers cannot be produced in melt form for use in this process. Additionally, the process produces the coated products in hemispherical or pastille shape which may not be appealing to many users. WO2010/108948 A1 discloses a system including a rotary die for manufacturing soft capsules of a viscous melt. EP 1 362 582 A1 discloses a method to coat a tablet by applying simultaneously two films onto the tablet.

Hence there is a need for an economical system and method for manufacturing polymer coated controlled release fertilizers continuously to enable the use any available fertilizer granule in any shape and form for producing polymer coated products with uniform coating thickness.

The above mentioned shortcomings, disadvantages and problems are addressed herein and which will be understood by reading and studying the following specification.

### OBJECTS OF THE EMBODIMENTS

The primary object of the embodiments herein is to provide a system and method for manufacturing a polymer coated controlled release fertilizers with a desired coating of uniform thickness in a single pass and in a high speed.

Another object of the embodiments herein is to develop a system and method for manufacturing polymer coated granules to enable a use of fertilizer granule of even and irregular shapes.

Yet another object of the embodiments herein is to develop a system and method for manufacturing a polymer coated controlled release fertilizers to enable a use of fertilizers in tablets, spikes, briquettes, or pellets shape.

Yet another object of the embodiments herein is to develop a system and method for manufacturing polymer-coated fertilizers to obtain a polymer coated fertilizer that prevents caking or agglomeration during transportation.

Yet another object of the embodiments herein is to develop a system and method for manufacturing a polymer coated controlled release fertilizers to enable a use of any commercially available polymer to coat the fertilizer without requiring any solvent or curing, or catalyst for forming the coating onto the fertilizer granule.

Yet another object of the embodiments herein is to develop a system and method for manufacturing a polymer coated controlled release fertilizers to allow a complete control of coating application onto the fertilizer granules to achieve a uniform and precise coating thickness.

Yet another object of the embodiments herein is to develop a system and method for manufacturing a polymer coated controlled release fertilizers to apply multiple polymer layers simultaneously thereby allowing the manufacturer to produce the fertilizers coated with multiple polymer layers.

Yet another object of an embodiment herein is to develop a system and method for manufacturing a polymer coated controlled release fertilizers to obtain the polymer coated fertilizer and fertilizer products with a desired coating thickness in a single pass thereby saving time, space and energy.

Yet another object of an embodiment herein is to develop a system and method for manufacturing a polymer coated controlled release fertilizers to obtain the polymer coated fertilizers and fertilizer products with a desired water vapor transmission rate (WVTR) thereby making a highly effective controlled release fertilizer products.

Yet another object of an embodiment herein is to develop a system and method for manufacturing a polymer coated controlled release fertilizers to obtain polymer coated fertilizers and fertilizer products with a desired duration of biodegradation so that the coating is degraded in a predetermined duration

These and other objects and advantages of the embodiments herein will become readily apparent from the following detailed description taken in conjunction with the accompanying drawings.

### SUMMARY

The various embodiments herein, provide a system, polymer-coated fertilizer and a method for manufacturing polymer-coated fertilizers as defined by claims 1, 13 and 14. According to an embodiment herein, the fertilizer granules are coated in two steps. In the first step, the fertilizer granules are partially coated by a first polymer film. Thereafter a second polymer film is applied onto the remaining uncoated surface of the fertilizer granule to encapsulate the fertilizer between the two polymer films. The encapsulated fertilizer between the first polymer film and the second polymer film is releasable over a time period or interval by diffusion through the first polymer film or the second polymer film.

A system for coating a plurality of articles in a continuous process using a polymer melt is provided. The system comprises a feeding mechanism connected to a first chill roll to supply a plurality of articles. The first chill roll comprises a plurality of first cavities on a peripheral surface and the plurality of first cavities houses and holds a plurality of articles. A first machine is provided for producing a first molten film and applying the first molten film on the plurality of articles held in the plurality of first cavities in the first chill roll to partially coat the plurality of articles with the first molten film. A second chill roll is placed at a side of the first chill roll or the second chill roll is placed on a top side of the first chill roll to receive a plurality of articles partially coated with a first molten film. A second machine is provided for producing and applying the second molten film on the plurality of articles held in the plurality of second cavities in the second chill roll and partially coated with the first molten film. A collector mechanism is provided to receive the plurality of articles coated with the first molten film and the second molten film from the second chill roll.

According to an embodiment herein, a system for coating a plurality of articles in a continuous process using a polymer melt is provided. The system comprises a first chill roll, a second chill roll, a first machine, a second machine, a feeding mechanism and a collector mechanism.

According to an embodiment herein, the first chill roll comprises a plurality of first cavities on a peripheral surface and the plurality of first cavities houses and holds a plurality of articles.

According to an embodiment herein, the second chill roll is identical to the first chill roll. The second chill roll is placed at a side of the first chill roll or the second chill roll is placed on a bottom side of the first chill roll. The second chill roll comprises a plurality of second cavities on a peripheral surface. The plurality of second cavities houses and holds a plurality of articles received from the first chill roll. The plurality of second cavities in the second chill roll matches with the plurality of first cavities in the first chill roll. The plurality of second cavities in the second chill roll and the plurality of first cavities in the first chill roll are arranged to face each other.

The system comprises a first machine for producing a first molten film and applying the first molten film on the plurality of articles held in the plurality of first cavities in the first chill roll to partially coat the plurality of articles with the first molten film. According to an embodiment herein, the first molten film has a desired thickness, width and chemical properties. The first machine comprises a first polymer extruder and a first film molding die. The first polymer extruder mixes, melts and extrudes a polymer to generate a homogenous melt of polymer. The first film molding die is attached to an end of the first polymer extruder for receiving a molten feed from the first polymer extruder to produce the first molten film of desired thickness and width. The polymer is a single polymer or a blend of polymers.

The system comprises a second machine for producing a second molten film and applying the second molten film on the plurality of articles held in the plurality of second cavities in the second chill roll. According to an embodiment herein, the second molten film has a desired thickness, width and chemical properties. The second machine comprises a second polymer extruder and a second film molding die. The second polymer extruder mixes, melts and extrudes a polymer to generate a homogenous melt of polymer. The second film molding die is attached to an end of the polymer extruder for receiving a molten feed from the second polymer extruder to produce the second molten film of desired thickness and width. The polymer is a single polymer or a blend of polymers.

The system comprises a feeding mechanism for feeding the plurality of articles to the first chill roll and a collection mechanism for collecting the plurality of articles from the second chill roll. The plurality of articles collected from the second chill roll are coated with the first polymer film at one side of the plurality of articles and with the second polymer film at an opposite side of the plurality of articles so that the plurality of articles are encapsulated within the first polymer film and the second polymer film. The plurality of articles is a controlled release article.

According to an embodiment herein, the plurality of articles is selected from a group consisting of a fertilizer, a pharmaceutical tablet, a detergent tablet, a biocide tablet, a pesticide granule, an animal feed and a food particle. The plurality of articles is water soluble. The plurality of articles is selected from a group consisting of a polymer coated articles.

According to an embodiment herein, the mean article size is within the range of 1 mm to 150 mm.

According to an embodiment herein, the system further comprises a cutting mechanism provided at the first chill roll and the second chill roll to cut the first polymer film and the second polymer film after application on the plurality of articles. The cutting mechanism is a sharp cutting edge provided on the surface of the first chill roll and the second chill roll.

According to an embodiment herein, the system further comprises a rotary pin to push the plurality of articles held at the plurality of second cavities in the second chill roll, when the second polymer film is applied on the plurality of the articles coated partially with the first polymer film.

According to an embodiment herein, the first chill roll is rotated in a clockwise direction through a desired angle for receiving the plurality of articles at the plurality of first cavities. The second chill roll is rotated in an anti-clockwise direction through a desired angle for receiving the plurality of articles at the plurality of cavities. The first chill roll and the second chill roll are rotated in a synchronized manner in the clockwise direction and in the anti-clockwise direction respectively so that atleast one of the plurality of first cavities in the first chill roll is arranged opposite to atleast one of the plurality of second cavities in the second chill roll to transfer the plurality of articles in the first cavities of the first chill roll to the plurality of second cavities in the second chill roll.

According to an embodiment herein, the first chill roll and the second chill roll comprise an internal fluid circulation mechanism for circulating a fluid to control a surface temperature of the first chill roll. The first chill roll and the second chill roll comprise a non-stick coating on an outer surface to avoid a sticking of the molten film onto the surface of the chill roll. The first chill roll and the second chill roll are rotatable cylindrical drums.

According to an embodiment herein, each of the plurality of first cavities and each of the plurality of second cavities hold one article. The plurality of first cavities and the pluralities of the second cavities are arranged in a shape selected from a group consisting of a tablet, spike, circular, rectangular, square and hexagonal shapes. Each one of the plurality of first cavities and each one of the plurality of second cavities holds at-least one article by a vacuum. The plurality of first cavities and the plurality of second cavities comprise an opening or hole in a bottom to provide the vacuum for holding the plurality of articles. A size of the plurality of first cavities is larger than a size of the plurality of articles and a size of the plurality of second cavities is larger than a size of the plurality of articles. The plurality of first cavities and the plurality of second cavities comprise a compressable cushion ring in a bottom. The cushion ring is made up of a material selected from a group consisting of a soft rubber material or a rubber like material.

According to an embodiment herein, the first polymer film die and the second polymer film die is any one of a curtain coating and a slot dye. The first polymer film die and the second polymer film die produce a single layer polymer film or a multilayer polymer film. According to an embodiment herein, the polymer is melt processed into a molten film of desired thickness.

According to an embodiment herein, the first polymer film is coated on the surface of the plurality of articles in a range of 1%-99%. The second polymer film is coated on the surface of the plurality of articles coated partially with the first polymer film in a range of 1%-99%.

According to an embodiment herein, the first polymer film and the second polymer film comprise one or more additives. The one or more additives are selected from a group consisting of hydrophilic additives, surfactants, inorganic minerals, biodegradable additives, pigments and water soluble additive. The hydrophilic additives are added for increasing a moisture permeability of the first polymer film and the second polymer film.

According to an embodiment herein, the inorganic mineral is selected from a group consisting of talc, calcium carbonate, mica, silica and their derivatives. The inorganic minerals are added for modifying a moisture permeability, reducing a temperature induced expansion of the first polymer film and the second polymer film, and reducing a tackiness of the first polymer film and the second polymer film, and preventing a caking or agglomeration of the plurality of articles coated with the first polymer film and the second polymer film.

According to an embodiment herein, wherein the biodegradable additives are added for adding a biodegradable characteristics to the first polymer film and the second polymer film and for expediting a biodegradation of the first polymer film and the second polymer film. The additives are added to the first polymer film and the second polymer film layer in a range of 0.01%-50% of a combined dry weight of the first polymer film and the second polymer film.

According to an embodiment herein, the desired thickness of the first polymer film and the second polymer film is within a range of 5 microns to 300 microns. The desired temperature of the first molten polymer film and the second molten polymer film is within a range of 50°C to 500⁰c. The desired chemical property of the first polymer film and the second polymer film is water vapor transmission rate (WVTR). The desired WVTR of the first polymer film and the second polymer film is within a range of 0.001 g/(m²·day) to 20000 g/(m²·day).

A method is provided for coating a plurality of articles in a continuous process using a polymer. The method comprises extruding and applying a first coating layer with a first molten polymer film on a plurality of articles held on a plurality of first cavities in a first chill roll for generating a plurality of articles coated partially with the first polymer film. The plurality of articles coated partially with the first polymer film is transferred from the first chill roll to a second chill roll. An uncoated portion of the plurality of articles coated partially with the first polymer film is exposed. A second coating layer of a second molten polymer film is extruded and applied on the plurality of articles held on a plurality of second cavities in the second chill roll for generating a plurality of articles fully coated with the first polymer film and the second polymer film. The plurality of articles is encapsulated between the first coating layer and the second coating layer by sealing the first polymer film and the second polymer film coated on the plurality of articles by melt fusing the second polymer film with the first polymer film on an overlapping area of the first polymer film and the second polymer film. The encapsulated plurality of articles is released over a time period by a diffusion of the encapsulated plurality of articles through the first polymer film or the second polymer film.

According to an embodiment herein, the plurality of articles are held in the plurality of first cavities and in the plurality of second cavities by a vacuum suction adopted at a bottom of the plurality of first cavities and at the plurality of second cavities. A pulling force of the vacuum suction under the plurality of articles is adapted to pull the first polymer film and the second polymer film around the plurality of articles and to adhere the first polymer film and the second polymer film respectively to an opposing surface of the plurality of articles.

According to an embodiment herein, the mean article size is within 1 mm to 150 mm.

According to an embodiment herein, the first polymer film is coated on the surface of the plurality of articles in a range of 1%-99%. The second polymer film is coated on the surface of the plurality of articles coated partially with the first polymer film in a range of 1%-99%.

According to an embodiment herein, the polymer is melt processed into a molten film.

According to an embodiment herein, the first polymer film and the second polymer film comprises one or more additives. The one or more additives are selected from a group consisting of hydrophilic additives, surfactants, inorganic minerals, biodegradable additives, pigments and water soluble additive. The hydrophilic additives or surfctants are added for increasing a moisture permeability of the first polymer film and the second polymer film.

According to an embodiment herein, the inorganic mineral is selected from a group consisting of talc, calcium carbonate, mica, silica and their derivatives. The inorganic minerals are added for modifying a moisture permeability, reducing a temperature induced expansion of the first polymer film and the second polymer film, and reducing a tackiness of the first polymer film and the second polymer film, and preventing a caking or agglomeration of the plurality of articles coated with the first polymer film and the second polymer film.

According to an embodiment herein, the biodegradable additives are added for adding a biodegradable characteristic to the first polymer film and the second polymer film and for expediting a biodegradation of the first polymer film and the second polymer film.

According to an embodiment herein, the additives are added to the first polymer film and the second polymer film layer in a range of 0.01%-50% of a combined dry weight of the first polymer film and the second polymer film.

According to an embodiment herein, the desired thickness of the first polymer film and the second polymer film is within a range of 5 microns to 300 microns. The desired temperature of the first molten polymer film and the second molten polymer film is within a range of 50°C to 500⁰c. The desired chemical property of the first polymer film and the second polymer film is water vapour transmission rate (WVTR). The WVTR value of the first polymer film and the second polymer film is within a range of 0.01 g /(m2·day) to 20,000 g /(m2·day).

According to an embodiment herein, the first chill roll and the second chill roll are rotatable cylindrical drums.

According to an embodiment herein, a method for manufacturing a controlled release fertilizer involves placing the fertilizer granules onto a surface and applying a first layer of polymer onto the exposed surface of the fertilizer granule. Then the uncoated portion of fertilizer is exposed and a second layer of polymer is applied to encapsulate the fertilizer granule between the first polymer layer and the second polymer layer such that the fertilizer granules are releasable over a time by a diffusion through at least one of the first polymer film or the second polymer film.

According to one embodiment herein, the manufacturing process of polymer-coated fertilizers has two main steps. In the first step, the fertilizer granules are partially coated by a first polymer film. Thereafter a second polymer film is applied onto the remaining uncoated fertilizer granule surface thereby encapsulating the fertilizer between the two polymer films.

According to one embodiment herein, the chill roll is a cylindrical drum capable of rotating. The chill roll has a plurality of cavities on the circumferential surface of the roll. The chill roll has an internal fluid circulation to control a surface temperature of the chill roll. The chill roll has a non stick coating applied on the surface of the roll. The chill roll rotates in a synchronized way so that cavities on the surface of the first chill roll always face the identical cavities on the second chill roll.

The cavity of the chill roll is of any shape and dimension. The cavity of the chill roll is suitable for holding the articles being coated. The shape of the cavity is chosen from a tablet, spike, circular, rectangular, square or hexagonal shape. The cavities are distributed all over the circumference of the first and second chill roll. Further the cavities are of larger dimension than that of the articles being coated. The cavities have soft rubber or rubber like compressable cushion rings in the bottom. The cavity has an opening/hole in the bottom through which a vacuum suction is provided to hold the articles. Further the articles are housed in the cavity and held with the vacuum suction in the cavity. Only one article is housed per cavity.

According to one embodiment herein, the first and second machine used for producing a molten film comprises a polymer extruder and a film die. The polymer extruder is capable of mixing, melting and extruding any commercially available polymer or blend of polymers or additives and creating a homogenous melt. The polymer film die is capable of producing a molten film of desired thickness width and properties from the polymer film melt produced by the extruder. The die is attached to the end of the extruder.

According to one embodiment herein, the film die is a curtain coating die or slot die capable of producing a polymer film using polymer melt. The film die has a single layer or multilayer polymer film extrusion capability. The film die is a commercially available extrusion die capable of producing a molten polymer film of desired thickness, and width.

According to one embodiment herein, the method for coating the fertilizers is initiated by feeding the articles on the first chill roll where the articles are held in the cavities by the vacuum suction at the bottom of the cavity. The next step is extruding a first layer of molten polymer film on the articles. The pull of vacuum suction under the said articles pulls the molten polymer layer around the articles to adhere the molten film to the surface of the article to create a partially coated article. Further the partially coated articles are transferred to the cavity of the second chill roll and the uncoated portion of the partially coated particles is exposed. A second layer of molten polymer is extruded and applied on the uncoated portion of the partially coated articles in such a way that second coating layer overlaps the first coating layer and the high temperature of the molten second layer helps in laminating the second layer with the overlapping area of the first layer. Hence the fertilizer particle or an article is sealed or encapsulated between the first polymer layer and second polymer layer.

According to one embodiment herein, the articles are any commercially available fertilizer granule in any dimension and shape. Further the articles is any one selected from a group consisting of a detergent tablet of any shape and dimension, a biocide tablet of any shape and dimension, a pesticide granule of any shape and dimension, an animal feed of any shape and dimension, and a food particle of any shape and dimension. The articles have even or uneven shape. The articles chosen are water soluble.

According to one embodiment herein, the first and second polymer film is any extrusion grade polymer, capable of producing a film of desired thickness and properties. The molten polymer film withstands a temperature range of 50°C-500°C. The thickness of the polymer film is in the range of 5-300 micron. Further, the desired chemical property of the first polymer film and the second polymer film is water vapor transmission rate (WVTR). The WVTR value of the first polymer film and the second polymer film is within a range of 0.01 g /(m2·day) to 20,000 g /(m2·day).

According to one embodiment herein, the partially coated articles have the polymer coat covering in the range of 1%-99% of the surface area. Further the second polymer film coating on the partially coated articles have polymer coat covering in the range of 1%-99% of the surface area, of the coated article.

According to one embodiment herein, a method of producing the controlled release delivery systems comprises coating a first layer of polymer onto the surface of the article creating partially coated articles. The remaining uncoated portion of the surface area is exposed and applied with a second coating layer. The article is sealed between the first coating layer and the second coating layer by melt fusing the second coating layer with the first coating layer in the overlapping area of the first coating layer and the second coating layer. The article is encapsulated between the first coating layer and the second coating layer. The encapsulated article between the first coating layer and second coating layer is releasable over the time by diffusion through the first coating layer or the second polymer film.

According to one embodiment herein, the first polymer film and second polymer film have multiple film layers forming a single laminated coating layer. The first or second polymer films have additives into the film structure. The additives are selected from the group consisting of hydrophilic additives, surfactants, inorganic minerals, biodegradable additives and pigments. The hydrophilic additives or surfactants are added for increasing the moisture permeability of the coating layer. Inorganic minerals such as talc, calcium carbonate, mica or silica or their derivatives are added for modifying moisture permeability, reducing a temperature induced expansion of the polymer coating, and reducing a caking or agglomeration of the coated articles. The biodegradation additives are added for expediting the biodegradation of the coating layer. The pigments are added for providing a color to the coating films. The amount of additives added to the polymer layer is within a range of 0.01%-50% of the combined dry weight of the first or second coating layer.

According to one embodiment herein, the first or second polymer film has multiple film layers co-extruded to form a single coating layer. Further the multilayer coated films are of different thickness or different additives or have additive loading levels.

According to one embodiment herein, cheap polymers are used to coat the fertilizer granules. Further the dry fertilizer granules in any shape, form are coated, thereby eliminating the need for using expensive spherical fertilizer granules. The method of coating the fertilizer granules does not involve any solvent or catalyst. The method gives a uniform coating on the fertilizer granules. Furthermore the method allows an application of multiple polymers simultaneously thereby allowing the manufacturer to produce a fertilizer coated with multiple polymer layers. The method has ability to apply a coating film with desired weight in a single time thereby saving time, space and energy to produce coated products.

These and other aspects of the embodiments herein will be better appreciated and understood when considered in conjunction with the following description and the accompanying drawings. It should be understood, however, that the following descriptions, while indicating preferred embodiments and numerous specific details thereof, are given by way of illustration and not of limitation.

### BRIEF DESCRIPTION OF THE DRAWINGS

The other objects, features and advantages will occur to those skilled in the art from the following description of the preferred embodiment and the accompanying drawings in which:
**FIG. 1** illustrates a block diagram of a system for manufacturing the polymer coated fertilizers, according to an embodiment herein.
**FIG. 2** illustrates a schematic view of a partially coated fertilizer granules obtained from a first chill roll in the system for manufacturing the polymer coated fertilizers, according to an embodiment herein.
**FIG. 3** illustrates a schematic view of the full coated fertilizer granules, obtained from a second chill roll in the system for manufacturing the polymer coated fertilizers, according to an embodiment herein according to an embodiment herein.
**FIG. 4** illustrates a schematic view of a first machine for applying a first polymer film and the polymer film breaking mechanism in the system for manufacturing the polymer coated fertilizers, according to an embodiment herein.
**FIG. 5** illustrates a schematic view of a second machine for applying a second polymer film with the polymer film cutting mechanism and a rotary pin for pushing the fertilizer granules through the cavity in the system for manufacturing the polymer coated fertilizers, according to an embodiment herein.

Although the specific features of the present invention are shown in some drawings and not in others. This is done for convenience only as each feature may be combined with any or all of the other features in accordance with the present invention.

### DETAILED DESCRIPTION OF THE DRAWINGS

In the following detailed description, a reference is made to the accompanying drawings that form a part hereof, and in which the specific embodiments that may be practiced is shown by way of illustration. These embodiments are described in sufficient detail to enable those skilled in the art to practice the embodiments and it is to be understood that the logical, mechanical and other changes may be made without departing from the scope of the embodiments. The following detailed description is therefore not to be taken in a limiting sense.

The various embodiments herein, provide a system and method for manufacturing polymer-coated fertilizers. According to an embodiment herein, the fertilizer granules are coated in two steps. In the first step, the fertilizer granules are partially coated by a first polymer film. Thereafter a second polymer film is applied onto the remaining uncoated surface of the fertilizer granule to encapsulate the fertilizer between the two polymer films. The encapsulated fertilizer between the first polymer film and the second polymer films is releasable over a time period or interval by diffusion through the first polymer film or the second polymer film.

According to an embodiment herein, a system for coating a plurality of articles in a continuous process using a polymer melt is provided. The system comprises a feeding mechanism connected to a first chill roll to supply a plurality of articles. The first chill roll comprises a plurality of first cavities on a peripheral surface and the plurality of first cavities houses and holds a plurality of articles. A first machine is provided for producing a first molten film and applying the first molten film on the plurality of articles held in the plurality of first cavities in the first chill roll to partially coat the plurality of articles with the first molten film. A second chill roll is placed at a side of the first chill roll or the second chill roll is placed on a bottom side of the first chill roll to receive a plurality of articles partially coated with a first molten film. A second machine is provided for producing and applying the second molten film on the plurality of articles held in the plurality of second cavities in the second chill roll and partially coated with the first molten film. A collector mechanism is provided to receive the plurality of articles coated with the first molten film and the second molten film from the second chill roll.

According to an embodiment herein, a system for coating a plurality of articles in a continuous process using a polymer melt is provided. The system comprises a first chill roll, a second chill roll, a first machine, a second machine, a feeding mechanism and a collector mechanism.

According to an embodiment herein, the first chill roll comprises a plurality of first cavities on a peripheral surface and the plurality of first cavities houses and holds a plurality of articles.

According to an embodiment herein, the second chill roll is identical to the first chill roll. The second chill roll is placed at a side of the first chill roll or the second chill roll is placed on a bottom side of the first chill roll. The second chill roll comprises a plurality of second cavities on a peripheral surface. The plurality of second cavities houses and holds a plurality of articles received from the first chill roll. The plurality of second cavities in the second chill roll matches with the plurality of first cavities in the first chill roll. The plurality of second cavities in the second chill roll and the plurality of first cavities in the first chill roll are arranged to face each other.

According to an embodiment herein, the system comprises a first machine for producing a first molten film and applying the first molten film on the plurality of articles held in the plurality of first cavities in the first chill roll to partially coat the plurality of articles with the first molten film. The first molten film has a desired thickness, width and chemical properties. The first machine comprises a first polymer extruder and a first film molding die. The first polymer extruder mixes, melts and extrudes a polymer to generate a homogenous melt of polymer. The first film molding die is attached to an end of the first polymer extruder for receiving a molten feed from the first polymer extruder to produce the first molten film of desired thickness and width. The polymer is a single polymer or a blend of polymers.

According to an embodiment herein, the system comprises a second machine for producing a second molten film and applying the second molten film on the plurality of articles held in the plurality of second cavities in the second chill roll. The second molten film has a desired thickness, width and chemical properties. The second machine comprises a second polymer extruder and a second film molding die. The second polymer extruder mixes, melts and extrudes a polymer to generate a homogenous melt of polymer. The second film molding die is attached to an end of the polymer extruder for receiving a molten feed from the second polymer extruder to produce the second molten film of desired thickness and width. The polymer is a single polymer or a blend of polymers.

According to an embodiment herein, the system comprises a feeding mechanism for feeding the plurality of articles to the first chill roll and a collection mechanism for collecting the plurality of articles from the second chill roll. The plurality of articles collected from the second chill roll are coated with the first polymer film at one side of the plurality of articles and with the second polymer film at an opposite side of the plurality of articles so that the plurality of articles are encapsulated within the first polymer film and the second polymer film. The plurality of articles is a controlled release article.

According to an embodiment herein, the plurality of articles is selected from a group consisting of a fertilizer, a pharmaceutical tablet, a detergent tablet, a biocide tablet, a pesticide granule, an animal feed and a food particle. The plurality of articles is water soluble.

According to an embodiment herein, the plurality of articles is selected from a group consisting of a polymer coated articles.

According to an embodiment herein, the mean article size is within the range of 1 mm to 150 mm.

According to an embodiment herein, the system further comprises a cutting mechanism provided at the first chill roll and the second chill roll to cut the first polymer film and the second polymer film after application on the plurality of articles. The cutting mechanism is a sharp cutting edge provided on the surface of the first chill roll and the second chill roll.

According to an embodiment herein, the system further comprises a rotary pin to push the plurality of articles held at the plurality of second cavities in the second chill roll, when the second polymer film is applied on the plurality of the articles coated partially with the first polymer film.

According to an embodiment herein, the first chill roll is rotated in a clockwise direction through a desired angle for receiving the plurality of articles at the plurality of first cavities. The second chill roll is rotated in an anti-clockwise direction through a desired angle for receiving the plurality of articles at the plurality of cavities. The first chill roll and the second chill roll are rotated in a synchronized manner in the clockwise direction and in the anti-clockwise direction respectively so that atleast one of the plurality of first cavities in the first chill roll is arranged opposite to atleast one of the plurality of second cavities in the second chill roll to transfer the plurality of articles in the first cavities of the first chill roll to the plurality of second cavities in the second chill roll.

According to an embodiment herein, the first chill roll and the second chill roll comprise an internal fluid circulation mechanism for circulating a fluid to control a surface temperature of the first chill roll. The first chill roll and the second chill roll comprise a non-stick coating on an outer surface to avoid a sticking of the molten film. The first chill roll and the second chill roll are rotatable cylindrical drums.

According to an embodiment herein, each of the plurality of first cavities and each of the plurality of second cavities hold one article. The plurality of first cavities and the pluralities of the second cavities are arranged in a shape selected from a group consisting of a tablet, spike, circular, rectangular, square and hexagonal shapes. Each one of the plurality of first cavities and each one of the plurality of second cavities holds at-least one article by a vacuum. The plurality of first cavities and the plurality of second cavities comprise an opening or hole in a bottom to provide the vacuum for holding the plurality of articles. A size of the plurality of first cavities is larger than a size of the plurality of articles and a size of the plurality of second cavities is larger than a size of the plurality of articles. The plurality of first cavities and the plurality of second cavities comprise a compressable cushion ring in a bottom. The compressible cushion ring is made up of a material selected from a group consisting of a soft rubber material or a rubber like material.

According to an embodiment herein, the first polymer film die and the second polymer film die is any one of a curtain coating and a slot dye. The first polymer film die and the second polymer film die produce a single layer polymer film or a multilayer polymer film.

According to an embodiment herein, the polymer is melt processed into a molten film of desired thickness.

According to an embodiment herein, the first polymer film is coated on the surface of the plurality of articles in a range of 1%-99%. The second polymer film is coated on the surface of the plurality of articles coated partially with the first polymer film in a range of 1%-99%.

According to an embodiment herein, the first polymer film and the second polymer film comprise one or more additives. The one or more additives are selected from a group consisting of synthetic or natural hydrophilic additives, surfactants, inorganic minerals, biodegradable additives, pigments and water soluble additive. The hydrophilic additives and surfactants are added for increasing a moisture permeability of the first polymer film and the second polymer film.

According to an embodiment herein, the inorganic mineral is selected from a group consisting of talc, calcium carbonate, mica, silica and their derivatives. The inorganic minerals are added for modifying a moisture permeability, reducing a temperature induced expansion of the first polymer film and the second polymer film, and reducing a tackiness of the first polymer film and the second polymer film, and preventing a caking or agglomeration of the plurality of articles coated with the first polymer film and the second polymer film.

According to an embodiment herein, wherein the biodegradable additives are added for adding a biodegradable characteristics to the first polymer film and the second polymer film and for expediting a biodegradation of the first polymer film and the second polymer film. The additives are added to the first polymer film and the second polymer film layer in a range of 0.01%-50% of a combined dry weight of the first polymer film and the second polymer film.

According to an embodiment herein, the desired thickness of the first polymer film and the second polymer film is within a range of 5 microns to 300 microns. The desired temperature of the first molten polymer film and the second molten polymer film is within a range of 50°C to 500°C. The desired chemical property of the first polymer film and the second polymer film is water vapor transmission rate (WVTR). The WVTR value of the first polymer film and the second polymer film is within a range of 0.01 g / (m2·day) to 20,000 g / (m2·day).

According to an embodiment herein, a method is provided for coating a plurality of articles in a continuous process using a polymer. The method comprises extruding and applying a first coating layer with a first molten polymer film on a plurality of articles held on a plurality of first cavities in a first chill roll for generating a plurality of articles coated partially with the first polymer film. The plurality of articles coated partially with the first polymer film is transferred from the first chill roll to a second chill roll. An uncoated portion of the plurality of articles coated partially with the first polymer film is exposed. A second coating layer of a second molten polymer film is extruded and applied on the plurality of articles held on a plurality of second cavities in the second chill roll for generating a plurality of articles fully coated with the first polymer film and the second polymer film. The plurality of articles is encapsulated between the first coating layer and the second coating layer by sealing the first polymer film and the second polymer film coated on the plurality of articles by melt fusing the second polymer film with the first polymer film on an overlapping area of the first polymer film and the second polymer film. The encapsulated plurality of articles is released over a time period by a diffusion of the encapsulated plurality of articles through the first polymer film or the second polymer film.

According to an embodiment herein, the plurality of articles are held in the plurality of first cavities and in the plurality of second cavities by a vacuum suction adopted at a bottom of the plurality of first cavities and at the plurality of second cavities. A pulling force of the vacuum suction under the plurality of articles is adapted to pull the first polymer film and the second polymer film around the plurality of articles and to adhere the first polymer film and the second polymer film respectively to an opposing surface of the plurality of articles.

According to an embodiment herein, the first polymer film is coated on the surface of the plurality of articles in a range of 1%-99%. The second polymer film is coated on the surface of the plurality of articles coated partially with the first polymer film in a range of 1%-99%.

The polymer is melt processed into a molten film.

According to an embodiment herein, the first polymer film and the second polymer film comprises one or more additives. The one or more additives are selected from a group consisting of hydrophilic additives, surfactants, inorganic minerals, biodegradable additives, pigments and water soluble additive. The hydrophilic additives or surfactants are added for increasing a moisture permeability of the first polymer film and the second polymer film.

According to an embodiment herein, the inorganic mineral is selected from a group consisting of talc, calcium carbonate, mica, silica and their derivatives. The inorganic minerals are added for reducing a moisture permeability, reducing a temperature induced expansion of the first polymer film and the second polymer film, and reducing a tackiness of the first polymer film and the second polymer film to prevent a caking of the plurality of articles coated with the first polymer film and the second polymer film.

According to an embodiment herein, the biodegradable additives are added for adding a biodegradable characteristic to the first polymer film and the second polymer film and for expediting a biodegradation of the first polymer film and the second polymer film.

According to an embodiment herein, the additives are added to the first polymer film and the second polymer film layer in a range of 0.01%-50% of a combined dry weight of the first polymer film and the second polymer film.

According to an embodiment herein, the desired thickness of the first polymer film and the second polymer film is within a range of 5 microns to 300 microns. The desired temperature of the first polymer film and the second polymer film is within a range of 50°C to 500°C. The desired chemical property of the first polymer film and the second polymer film is water vapor transmission rate (WVTR). The WVTR value of the first polymer film and the second polymer film is within a range of 0.01 g /(m2·day) to 20,000 g/(m2·day).

According to an embodiment herein, the first chill roll and the second chill roll are rotatable cylindrical drums.

According to an embodiment herein, a method for manufacturing a controlled release fertilizer involves placing the fertilizer granules onto a surface and applying a first layer of polymer onto the exposed surface of the fertilizer granule. Then the uncoated portion of fertilizer is exposed and a second layer of polymer is applied to encapsulate the fertilizer granule between the first polymer layer and the second polymer layer such that the fertilizer granules are releasable over a time by a diffusion through at least one of the first polymer film or the second polymer film.

According to one embodiment herein, the manufacturing process of polymer-coated fertilizers has two main steps. In the first step, the fertilizer granules are partially coated by a first polymer film. Thereafter a second polymer film is applied onto the remaining uncoated fertilizer granule surface thereby encapsulating the fertilizer between the two polymer films.

According to one embodiment herein, an apparatus for coating plurality of articles in a continuous process using polymer melt comprises a first chill roll, a second identical chill roll, a first machine, a second machine, a feeding mechanism and a collection mechanism. The first chill roll comprises a plurality of cavities placed side by side and on the periphery of the first chill roll. The cavities are capable of holding the articles. The second identical chill roll comprises plurality of cavities placed side by side and on the periphery of second chill roll and the cavities of first and second chill rolls are facing each other. The first machine is used for producing a molten film of desired thickness, width and properties. The first polymer film is placed in such a way that the molten polymer film is applied directly onto the articles held in the cavity of the first chill roll. The second machine is adapted for producing a molten film of desired thickness, width and property. The second machine is placed in such a way that the molten film is applied directly onto the articles held in the cavity of the second chill roll. The feeding mechanism is for feeding the articles onto the first chill roll. The collection mechanism is for collecting coated articles from the second chill roll.

According to one embodiment herein, the chill roll is a cylindrical drum capable of rotating. The chill roll has a plurality of cavities on the circumferential surface of the roll. The chill roll has an internal fluid circulation to control a surface temperature of the chill roll. The chill roll has a non stick coating applied on the surface of the roll. The chill roll rotates in a synchronized way so that cavities on the surface of the first chill roll always face the identical cavities on the second chill roll.

The cavity of the chill roll is of any shape and dimension. The cavity of the chill roll is suitable for holding the articles being coated. The shape of the cavity is chosen from a tablet, spike, circular, rectangular, square or hexagonal shape. The cavities are distributed all over the circumference of the first and second chill roll. Further the cavities are of larger dimension than that of the articles being coated. The cavities have soft rubber or rubber like compressable cushion rings in the bottom. The cavity has an opening/hole in the bottom through which a vacuum suction is provided to hold the articles. Further the articles are housed in the cavity and held with the vacuum suction in the cavity. Only one article is housed per cavity.

According to one embodiment herein, the first and second machine used for producing a molten film comprises a polymer extruder and a film die. The polymer extruder is capable of mixing, melting and extruding any commercially available polymer or blend of polymers or additives and creating a homogenous melt. The polymer film die is capable of producing a molten film of desired thickness width and properties from the polymer film melt produced by the extruder. The die is attached to the end of the extruder.

According to one embodiment herein, the film die is a curtain coating die or slot die capable of producing a polymer film using polymer melt. The film die has a single layer or multilayer polymer film extrusion capability. The film die is a commercially available extrusion die capable of producing a molten polymer film of desired thickness, width and properties.

According to one embodiment herein, the method for coating the fertilizers is initiated by feeding the articles on the first chill roll where the articles are held in the cavities by the vacuum suction at the bottom of the cavity. The next step is extruding a first layer of molten polymer film on the articles. The pull of vacuum suction under the said articles pulls the molten polymer layer around the articles to adhere the molten film to the surface of the article to create a partially coated article. Further the partially coated articles are transferred to the cavity of the second chill roll and the uncoated portion of the partially coated particles is exposed. A second layer of molten polymer is extruded and applied on the uncoated portion of the partially coated articles in such a way that second coating layer overlaps the first coating layer and the high temperature of the molten second layer helps in laminating the second layer with the overlapping area of the first layer. Hence the fertilizer particle or an article is sealed or encapsulated between the first polymer layer and second polymer layer.

According to one embodiment herein, the articles are any commercially available fertilizer granule in any dimension and shape. Further the articles is any one selected from a group consisting of a detergent tablet of any shape and dimension, a biocide tablet of any shape and dimension, a pesticide granule of any shape and dimension, an animal feed of any shape and dimension, and a food particle of any shape and dimension. The articles have even or uneven shape. The articles chosen are water soluble.

According to one embodiment herein, the first and second polymer film is any extrusion grade polymer, capable of producing a film of desired thickness and properties. The desired temperature of the first polymer film and the second polymer film is within a range of 50°C to 500°C. Further the thickness of the polymer film is in the range of 5-300 micron. The desired chemical property of the first polymer film and the second polymer film is water vapor transmission rate (WVTR). The WVTR value of the first polymer film and the second polymer film is within a range of 0.01 g /(m2·day) to 20,000 g/(m2·day).

According to one embodiment herein, the partially coated articles have the polymer coat covering in the range of 1%-99% of the surface area. Further the second polymer film coating on the partially coated articles have polymer coat covering in the range of 1%-99% of the surface area, of the partially coated article.

The method of producing the controlled release delivery systems comprises coating a first layer of polymer onto the surface of the article creating partially coated articles. The remaining uncoated portion of the surface area is exposed and applied with a second coating layer. The article is sealed between the first coating layer and the second coating layer by melt fusing the second coating layer with the first coating layer in the overlapping area of the first coating layer and the second coating layer. The article is encapsulated between the first coating layer and the second coating layer. The encapsulated article between the first coating layer and second coating layer is releasable over the time by diffusion through the first coating layer or the second polymer film.

According to one embodiment herein, the first polymer film and second polymer film have multiple film layers forming a single laminated coating layer. The first or second polymer films have additives into the film structure. The additives are selected from the group consisting of hydrophilic additives, inorganic minerals, biodegradable additives and pigments. The hydrophilic additives are added for increasing the moisture permeability of the coating layer. Inorganic minerals such as talc, calcium carbonate, mica or silica or their derivatives are added for reducing moisture permeability, reducing a temperature induced expansion of the polymer coating and reducing a tackiness of the coating to prevent a caking of the coated articles. The biodegradation additives are added for expediting the biodegradation of the coating layer. The pigments are added for providing a color to the coating films. The amount of additives added to the polymer layer is within a range of 0.01%-50% of the combined dry weight of the first or second coating layer.

According to one embodiment herein, the first or second polymer film has multiple film layers laminated to form a single coating layer. Further the multilayer coated films are of different thickness or different additives or have additive loading levels.

According to one embodiment herein, cheap polymers are used to coat the fertilizer granules. Further the dry fertilizer granules in any shape, form are coated, thereby eliminating the energy cost of granulating the fertilizer. The method of coating the fertilizer granules does not involve any solvent or catalyst. The method gives a uniform coating on the fertilizer granules. Furthermore the method allows an application of multiple polymers simultaneously thereby allowing the manufacturer to produce a fertilizer coated with multiple polymer layers. The method has ability to apply a coating film with desired weight in a single time thereby saving time, space and energy to produce coated products.

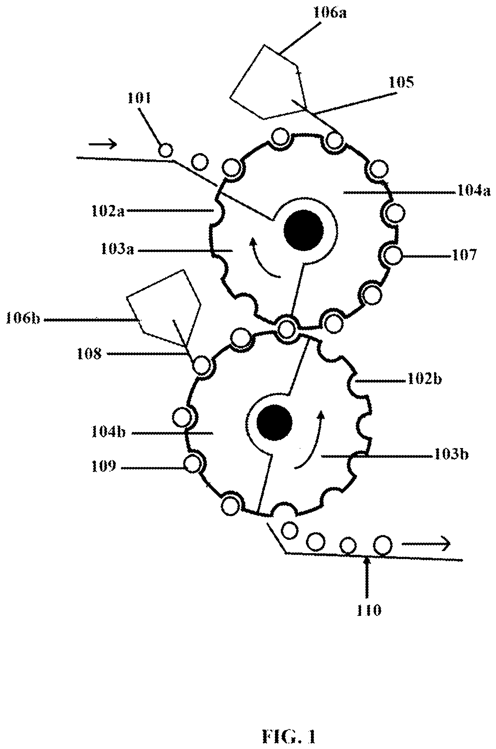

FIG. 1 illustrates a block diagram of a system for manufacturing the polymer coated fertilizers, according to an embodiment herein. With respect to FIG.1, the fertilizer granule101 is fed onto the cavity 102a of the first chill roll 103a. The fertilizer granule 101 is held into the first cavity 102a of the first chill roll 103a with a vacuum suction 104a through the tiny pores in the cavity 102a. Thereafter the first polymer film 105 from the first polymer extruder 106a is applied onto the fertilizer granule 101 held in a grid like pattern in the cavity 102a on the chill roll 103a. This creates a partially coated fertilizer 107. The partially coated fertilizer 107 is then transferred to the second chill roll 103b where this partially coated fertilizer 107 is held into the second cavity 102b by the vacuum suction 104b. The first cavity 102a of the first chill roll 103a is aligned in such a way that the cavity 102a of the chill roll 103a is facing the cavity 102b of the chill roll 103b while transferring the partially coated fertilizer 107. The transfer of the partially coated fertilizers 107 from the first chill roll 103a to second chill roll 103b exposes the uncoated part of the partially coated fertilizer 107. Thereafter the second polymer film 108 is extruded from the second polymer extruder 106b and this second polymer layer 108 is then coated onto the uncoated potion of partially coated fertilizer 107 encapsulating the fertilizer granules between the first polymer film 105 and the second polymer film 108. The second polymer film 108 coats and seals the coating by melting and fusing with first polymer film 105 thereby producing the polymer coated fertilizer 109. Thereafter these coated fertilizers 109 are sent to collection bin 110 for packaging.

According to one embodiment herein, the first chill roll 103a and the second chill roll103b is replaced with a perforated steel belt with vacuum.

According to one embodiment herein, the cavity 102a is made of electrically conductive metal while the first chill roll 103a and the second chill roll 103b have a coating of electrically neutral material. According to one embodiment herein, the charged fertilizer granule are attracted towards the cavity 102a and the fertilize granules 101 are held in its place without the use of vacuum suction 104a, when electrically charged fertilizer granules 101 are fed onto the chill roll 103a.

According to one embodiment herein, the extruder 106a or extruder 106b have co-extrusion facility with an ability to extrude multiple layers of polymers.

According to one embodiment herein the extruders 106a and 106 b are replaced with a suitable coating devices such as, but not limited to, spray coating, curtain coating, powder coating, rod coating, thermal lamination coating, or UV lamination coating devices.

According to one embodiment herein, the fertilizer granule 101 is any one of rectangular, tablet, hemispherical, split pea, spike, shapes or any shape in which the fertilizers are available commercially.

According to one embodiment herein, the cavity 101is rectangular, tablet, square, hemispherical, spike, or such shapes.

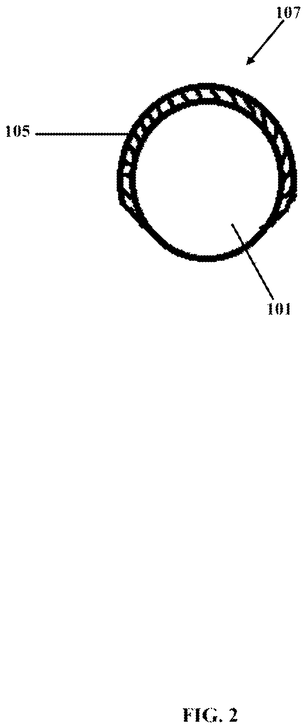

**FIG. 2** illustrates a schematic view of a partially coated fertilizer granules obtained from a first chill roll in the system for manufacturing the polymer coated fertilizers, according to an embodiment herein. With respect to FIG. 2 the fertilizer granule 101 is partially coated with the first polymer film 105 to obtain a partially coated fertilizer granule 107.

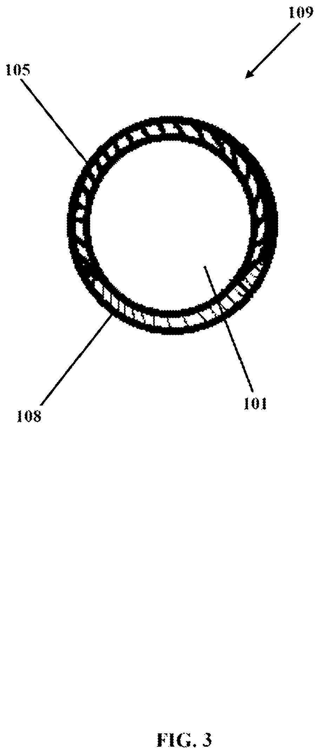

**FIG. 3** illustrates a schematic view of the full coated fertilizer granules, obtained from a second chill roll in the system for manufacturing the polymer coated fertilizers, according to an embodiment herein according to an embodiment herein. With respect to FIG. 3 the full polymer-coated fertilizer granule 109 has the fertilizer granule 101 coated with the first polymer film 105 and the second polymer film 108 on the two opposite faces of the fertilizer granule so that the fertilizer granule is encapsulated between the first polymer film 105 and the second polymer film 108.

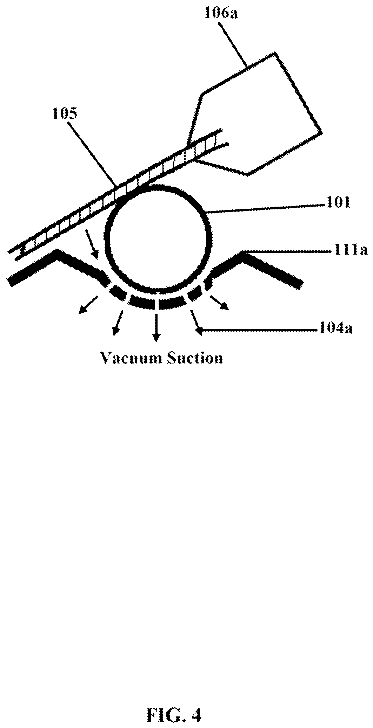

**FIG. 4** illustrates a schematic view of a first machine for applying a first polymer film and the polymer film breaking mechanism in the system for manufacturing the polymer coated fertilizers, according to an embodiment herein. With respect to FIG. 4, the chill roll surfaces have designs to assist the breakage of the film 105 while applied onto the fertilizer granule 101from the extruder 106a. The design include but not limited to a sharp edge 111a, around the cavity that tears the film away while the film is being pulled under vacuum suction 104a around the fertilizer granule 101.

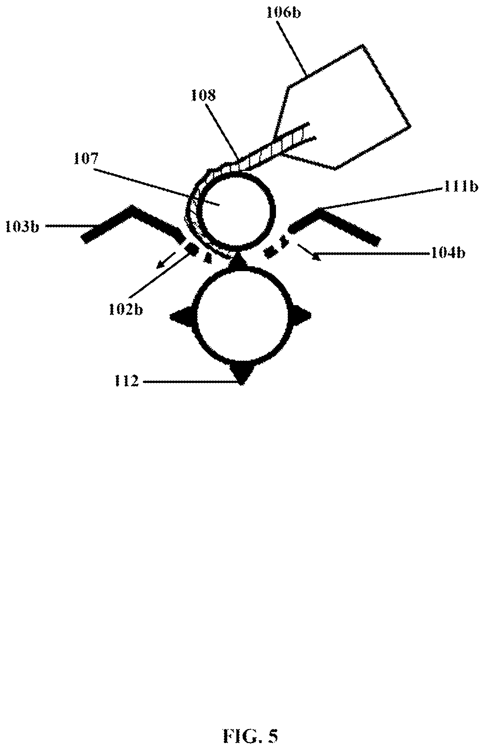

**FIG. 5** illustrates a schematic view of a second machine for applying a second polymer film with the polymer film cutting mechanism and a rotary pin for pushing the fertilizer granules through the cavity in the system for manufacturing the polymer coated fertilizers, according to an embodiment herein. With respect to FIG.5, a rotary pin 112 is provided for pushing the fertilizer granules through the cavity. The chill rolls 103b has a rotary pin 112 aligned under the cavity 102b of the cylinder in such a way that the pins 112 push the partially coated fertilizer 107 up towards the polymer layer 108 right at the moment when the polymer layer 108 is being applied from the extruder 106b. The vacuum suction 104b is deployed to hold the partially coated fertilizer granule 107. The partially coated fertilizer granule 107 is held by the chill rolls 103b by vacuum suction 104b. The extruder 106b gives the second molten polymer film 108, to coat the partially coated fertilizer granule 107. The surface of the chill rolls 103b has sharp edge 111b to assist the breakage of the polymer film while applied onto the fertilizer granule 107. The design include but not limited to a sharp edge 111b, around the cavity that tears the film away while the film is being pulled under vacuum suction 104b around the fertilizer granule 107.

According to one embodiment herein, the steel belt is used to eliminate the use of first chill roll. In yet another embodiment of the invention a series of soft cushion protective rollers can be used on the surface of the chill roll gently pressing the granules onto the cylinder so that the granules do not fly off due to a centrifugal force of the rotating chill roll. Alternatively an air cushion is used to generate air jets or electrostatic charge on the granules to prevent a flying off of the granules from the rotating chill roll.

According to one embodiment herein, the layer of polymer contains various types of additives to enhance the properties of polymer such as fertilizer release rate through the polymer layer, biodegradation of the polymer layer, UV resistance of the polymer layer, resistance of temperature induced fertilizer release through the layer using talc and other minerals.

According to one embodiment herein, the surface of the coated granules comprises of water absorption chemicals such as superabsorbent.

According to one embodiment herein, the surface of the chemicals contains paper particles or cellulose particles attached to the surface of the coated granules. These cellulose particles are used to carry pesticides by absorbing the pesticides onto the cellulose particles attached to the coated surface.

According to one embodiment herein, the polymer film comprises of many polymer layers co-extruded as a single layer of polymer.

## Claims

1. A system for coating a plurality of articles in a continuous process using polymer melt, the system comprising:
a first chill roll (103a), wherein the first chill roll comprises a plurality of first cavities on a peripheral surface, and wherein the plurality of first cavities houses and holds a plurality of articles;
a second chill roll (103b), wherein the second chill roll comprises a plurality of second cavities on a peripheral surface, and wherein the plurality of second cavities houses and holds a plurality of articles transferred from the first chill roll, and wherein the plurality of second cavities in the second chill roll matches with the plurality of first cavities in the first chill roll, and wherein the plurality of second cavities in the second chill roll and the plurality of first cavities in the first chill roll are arranged to face each other;
a first machine (106a) for producing a first molten film (105) and applying the first molten film on the plurality of articles held in the plurality of first cavities in the first chill roll to partially coat the plurality of articles with the first molten film;
a second machine (106b) for producing a second molten film (108) and applying the second molten film on the plurality of partially coated articles transferred from the first chill roll to the second chill roll and held in the plurality of second cavities in the second chill roll to form a plurality of coated articles; and
a feeding mechanism for feeding the plurality of articles to the first chill roll; and a collection mechanism for collecting the plurality of coated articles from the second chill roll;
wherein each coated article of the plurality of coated articles collected from the second chill roll has a coating of the first polymer film at one side of the coated article and the second polymer film at an opposite side of the coated article so that each article of the plurality of articles are encapsulated within the first polymer film and the second polymer film.

2. The system of claim 1 wherein the second chill roll is identical to the first chill roll.

3. The system of claim 1 or claim 2 wherein the second chill roll is placed at a side of the first chill roll or the second chill roll is placed on a bottom side of the first chill roll.

4. The system of any preceding claim, wherein each of the first molten film and the second molten film has a desired thickness, width and chemical properties, and wherein the first machine and the second machine each comprise a polymer extruder and a film moulding die, and wherein each polymer extruder mixes, melts and extrudes a polymer to generate a homogenous melt of polymer, and wherein each film moulding die is attached to an end of a respective polymer extruder for receiving a molten feed from the polymer extruder to produce a molten film of desired thickness and width

5. The system of any preceding claim wherein the encapsulated plurality of articles are controlled release articles.

6. The system of any preceding claim wherein the polymer is a single polymer or a blend of polymers and the first polymer film and the second polymer film comprise a single polymer layer or multiple polymer layers.

7. The system according to any preceding claim, wherein the plurality of articles is selected from a group consisting of a fertilizer, a pharmaceutical tablet, a detergent tablet, a biocide tablet, a pesticide granule, an animal feed and a food particle.

8. The system according to any preceding claim further comprises a cutting mechanism provided at the first chill roll and the second chill roll to cut the first polymer film and the second polymer film after application on the plurality of articles, and wherein the cutting mechanism is a sharp cutting edge provided on the surface of the first chill roll and the second chill roll.

9. The system according to any preceding claim, wherein the plurality of first cavities and the plurality of second cavities comprise an opening or hole in a bottom to provide the vacuum for holding the plurality of articles.

10. The system according to any preceding claim, wherein the plurality of first cavities and the plurality of second cavities comprise a compressible cushion ring in a bottom, and wherein the cushion ring is made up of a material selected from a group consisting of a soft rubber material or a rubber like material.

11. The system according to any preceding claim, wherein the polymer is melt processed into a molten film of desired thickness.

12. The system according to any preceding claim, wherein the desired thickness of the first polymer film and the second polymer film is within a range of 5 microns to 300 microns.

13. A polymer-coated article of fertilizer, the article comprising:
a granule of fertilizer (101), the granule having a surface;
a first polymer film (105) that covers a first part of the surface of the granule and allows fertilizer in the granule to diffuse through the film over time; and
a second polymer film (108) that covers a second part of the surface of the granule that the first polymer film does not cover and allows fertilizer in the granule to diffuse through the film over time;
wherein the first polymer film has a first overlapping area in which the first polymer film is melt fused with the second polymer film to seal the first polymer film and the second polymer film and encapsulate the granule between the two polymer films;
wherein the second polymer film has a second overlapping area in which the second polymer film is melt fused with the first polymer film; and
wherein the first overlapping area and the second overlapping area together have a uniform thickness relative to a thickness of the first polymer film that covers the first part of the surface of the granule and a thickness of the second polymer film that covers the second part of the surface of the granule.

14. A method for coating a plurality of articles in a continuous process using polymer melt, the method comprising
extruding and applying a first coating layer with a first molten polymer film on a plurality of articles held on a plurality of first cavities in a first chill roll for generating a plurality of articles coated partially with the first polymer film;
transferring the plurality of articles coated partially with the first polymer film from the first chill roll to a second chill roll;
exposing an uncoated portion of the plurality of articles coated partially with the first polymer film;
extruding and applying a second coating layer of a second molten polymer film on the plurality of articles held on a plurality of second cavities in the second chill roll for generating a plurality of articles fully coated with the first polymer film and the second polymer film;
encapsulating the plurality of articles between the first coating layer and the second coating layer by sealing the first polymer film and the second polymer film coated on the plurality of articles by melt fusing the second polymer film with the first polymer film on an overlapping area of the first polymer film and the second polymer film, and wherein the encapsulated plurality of articles is released over a time period by a diffusion of the encapsulated plurality of articles through the first polymer film or the second polymer film;
wherein the plurality of articles are held in the plurality of first cavities and in the plurality of second cavities by a vacuum suction adopted at a bottom of the plurality of first cavities and at the plurality of second cavities and wherein a pulling force of the vacuum suction under the plurality of articles is adapted to pull the first polymer film and the second polymer film around the plurality of articles and to adhere the first polymer film and the second polymer film respectively to an opposing surface of the plurality of articles.

## Patentansprüche

1. System zum Beschichten einer Vielzahl von Gegenständen in einem kontinuierlichen Prozess unter Verwendung von Polymerschmelze, wobei das System aufweist:
eine erste Kühlwalze (103a), wobei die erste Kühlwalze eine Vielzahl von ersten Hohlräumen auf einer Umfangsfläche aufweist, und wobei die Vielzahl von ersten Hohlräumen eine Vielzahl von Gegenständen aufnimmt und hält;
eine zweite Kühlwalze (103b), wobei die zweite Kühlwalze eine Vielzahl von zweiten Hohlräumen auf einer Umfangsfläche aufweist, und wobei die Vielzahl von zweiten Hohlräumen eine Vielzahl von Gegenständen, die von der ersten Kühlwalze übertragen werden, aufnimmt und hält, und wobei die Vielzahl von zweiten Hohlräumen in der zweiten Kühlwalze mit der Vielzahl von ersten Hohlräumen in der ersten Kühlwalze zusammenpasst, und wobei die Vielzahl von zweiten Hohlräumen in der zweiten Kühlwalze und die Vielzahl von ersten Hohlräumen in der ersten Kühlwalze so angeordnet sind, dass sie einander gegenüberliegen;
eine erste Maschine (106a) zum Herstellen einer ersten geschmolzenen Folie (105) und zum Aufbringen der ersten geschmolzenen Folie auf die Mehrzahl von Gegenständen, die in der Mehrzahl von ersten Hohlräumen in der ersten Kühlwalze gehalten werden, um die Mehrzahl von Gegenständen teilweise mit der ersten geschmolzenen Folie zu beschichten;
eine zweite Maschine (106b) zum Herstellen einer zweiten geschmolzenen Folie (108) und zum Aufbringen der zweiten geschmolzenen Folie auf die Vielzahl von teilweise beschichteten Gegenständen, die von der ersten Kühlwalze zu der zweiten Kühlwalze übertragen und in der Vielzahl von zweiten Hohlräumen in der zweiten Kühlwalze gehalten werden, um eine Vielzahl von beschichteten Gegenständen zu bilden;
und einen Zuführmechanismus zum Zuführen der Vielzahl von Gegenständen zu der ersten Kühlwalze; und einen Sammelmechanismus zum Sammeln der Vielzahl von beschichteten Gegenständen von der zweiten Kühlwalze;
wobei jeder beschichtete Gegenstand der Vielzahl von beschichteten Gegenständen, die von der zweiten Kühlwalze gesammelt werden, eine Beschichtung aus der ersten Polymerfolie auf einer Seite des beschichteten Gegenstands und der zweiten Polymerfolie auf einer gegenüberliegenden Seite des beschichteten Gegenstands aufweist, so dass jeder Gegenstand der Vielzahl von Gegenständen innerhalb der ersten Polymerfolie und der zweiten Polymerfolie eingekapselt ist.

2. System nach Anspruch 1, bei dem die zweite Kühlwalze mit der ersten Kühlwalze identisch ist.

3. System nach Anspruch 1 oder Anspruch 2, bei dem die zweite Kühlwalze an einer Seite der ersten Kühlwalze oder die zweite Kühlwalze an einer Unterseite der ersten Kühlwalze angeordnet ist.

4. System nach einem der vorhergehenden Ansprüche, wobei sowohl die erste geschmolzene Folie als auch die zweite geschmolzene Folie eine gewünschte Dicke, Breite und chemische Eigenschaften aufweist, und wobei die erste Maschine und die zweite Maschine jeweils einen Polymerextruder und eine Folienformdüse aufweisen, und wobei jeder Polymerextruder ein Polymer mischt, schmilzt und extrudiert, um eine homogene Polymerschmelze zu erzeugen, und wobei jede Folienformdüse an einem Ende eines jeweiligen Polymerextruders angebracht ist, um eine geschmolzene Zufuhr von dem Polymerextruder aufzunehmen, um eine geschmolzene Folie mit der gewünschten Dicke und Breite zu erzeugen.

5. System nach einem der vorhergehenden Ansprüche, wobei die eingekapselte Vielzahl von Artikeln Artikel mit kontrollierter Freisetzung sind.

6. System nach einem der vorhergehenden Ansprüche, wobei das Polymer ein einzelnes Polymer oder eine Polymermischung ist und die erste Polymerfolie und die zweite Polymerfolie eine einzelne Polymerschicht oder mehrere Polymerschichten aufweisen.

7. System nach einem der vorhergehenden Ansprüche, wobei die Mehrzahl der Artikel aus einer Gruppe ausgewählt ist, die aus einem Düngemittel, einer pharmazeutischen Tablette, einer Waschmitteltablette, einer Biozid-Tablette, einem Pestizidgranulat, einem Tierfutter und einem Lebensmittelpartikel besteht.

8. System nach einem der vorhergehenden Ansprüche, ferner aufweisend einen Schneidmechanismus, der an der ersten Kühlwalze und der zweiten Kühlwalze vorgesehen ist, um die erste Polymerfolie und die zweite Polymerfolie nach dem Aufbringen auf die Vielzahl von Gegenständen zu schneiden, und wobei der Schneidmechanismus eine scharfe Schneidkante ist, die an der Oberfläche der ersten Kühlwalze und der zweiten Kühlwalze vorgesehen ist.

9. System nach einem der vorhergehenden Ansprüche, wobei die mehreren ersten Hohlräume und die mehreren zweiten Hohlräume eine Öffnung oder ein Loch in einem Boden aufweisen, um das Vakuum zum Halten der mehreren Artikel bereitzustellen.

10. System nach einem der vorhergehenden Ansprüche, wobei die mehreren ersten Hohlräume und die mehreren zweiten Hohlräume einen komprimierbaren Polsterring in einem Boden aufweisen und wobei der Polsterring aus einem Material besteht, das aus einer Gruppe ausgewählt ist, die aus einem weichen Gummimaterial oder einem gummiähnlichen Material besteht.

11. System nach einem der vorhergehenden Ansprüche, wobei das Polymer in der Schmelze zu einer geschmolzenen Folie mit der gewünschten Dicke verarbeitet wird.

12. Das System nach einem der vorhergehenden Ansprüche, wobei die gewünschte Dicke der ersten Polymerfolie und der zweiten Polymerfolie in einem Bereich von 5 Mikron bis 300 Mikron liegt.

13. Polymerbeschichteter Düngemittelartikel, wobei der Artikel aufweist:
ein Düngemittelgranulat (101), wobei das Granulat eine Oberfläche aufweist;
einer ersten Polymerfolie (105), die einen ersten Teil der Oberfläche des Granulats bedeckt und es dem Düngemittel im Granulat ermöglicht, mit der Zeit durch die Folie zu diffundieren; und
einer zweiten Polymerfolie (108), die einen zweiten Teil der Oberfläche des Granulats bedeckt, den die erste Polymerfolie nicht bedeckt, und der es dem Dünger im Granulat ermöglicht, mit der Zeit durch die Folie zu diffundieren;
wobei die erste Polymerfolie einen ersten überlappenden Bereich aufweist, in dem die erste Polymerfolie mit der zweiten Polymerfolie schmelzverschweißt ist, um die erste Polymerfolie und die zweite Polymerfolie zu versiegeln und das Granulat zwischen den beiden Polymerfolien einzukapseln;
wobei die zweite Polymerfolie einen zweiten überlappenden Bereich aufweist, in dem die zweite Polymerfolie mit der ersten Polymerfolie aufgeschmolzen und verschmolzen ist; und
wobei der erste überlappende Bereich und der zweite überlappende Bereich zusammen eine einheitliche Dicke relativ zu einer Dicke der ersten Polymerfolie, die den ersten Teil der Oberfläche des Granulats bedeckt, und einer Dicke der zweiten Polymerfolie, die den zweiten Teil der Oberfläche des Granulats bedeckt, aufweisen.

14. Verfahren zum Beschichten einer Vielzahl von Gegenständen in einem kontinuierlichen Prozess unter Verwendung von Polymerschmelze, wobei das Verfahren umfasst
Extrudieren und Aufbringen einer ersten Beschichtungsschicht mit einer ersten geschmolzenen Polymerfolie auf eine Vielzahl von Gegenständen, die in einer Vielzahl von ersten Hohlräumen in einer ersten Kühlwalze gehalten werden, um eine Vielzahl von Gegenständen zu erzeugen, die teilweise mit der ersten Polymerfolie beschichtet sind;
Übertragen der Vielzahl von Gegenständen, die teilweise mit der ersten Polymerfolie beschichtet sind, von der ersten Kühlwalze zu einer zweiten Kühlwalze;
Freilegen eines unbeschichteten Teils der Vielzahl von Gegenständen, die teilweise mit der ersten Polymerfolie beschichtet sind;
Extrudieren und Aufbringen einer zweiten Beschichtungsschicht aus einer zweiten geschmolzenen Polymerfolie auf die Vielzahl von Gegenständen, die in einer Vielzahl von zweiten Hohlräumen in der zweiten Kühlwalze gehalten werden, um eine Vielzahl von Gegenständen zu erzeugen, die vollständig mit der ersten Polymerfolie und der zweiten Polymerfolie beschichtet sind;
Einkapseln der Vielzahl von Gegenständen zwischen der ersten Beschichtungsschicht und der zweiten Beschichtungsschicht durch Versiegeln der ersten Polymerfolie und der zweiten Polymerfolie, mit denen die Vielzahl von Gegenständen beschichtet ist, durch Auf- und Verschmelzen der zweiten Polymerfolie mit der ersten Polymerfolie auf einer überlappenden Fläche der ersten Polymerfolie und der zweiten Polymerfolie, und wobei die eingekapselte Vielzahl von Gegenständen über einen Zeitraum durch eine Diffusion der eingekapselten Vielzahl von Gegenständen durch die erste Polymerfolie oder die zweite Polymerfolie freigegeben wird;
wobei die Mehrzahl von Gegenständen in der Mehrzahl von ersten Hohlräumen und in der Mehrzahl von zweiten Hohlräumen durch einen Vakuumsog gehalten wird, der an einem Boden der Mehrzahl von ersten Hohlräumen und an der Mehrzahl von zweiten Hohlräumen angenommen wird, und wobei eine Zugkraft des Vakuumsogs unter der Mehrzahl von Gegenständen angepasst ist, um die erste Polymerfolie und die zweite Polymerfolie um die Mehrzahl von Gegenständen herum zu ziehen und die erste Polymerfolie bzw. die zweite Polymerfolie an einer gegenüberliegenden Oberfläche der Mehrzahl von Gegenständen anzuhaften.

## Revendications

1. Un système pour revêtir une pluralité d'articles dans un processus continu utilisant un polymère fondu, le système comprenant :
un premier rouleau de refroidissement (103a), le premier rouleau de refroidissement comprenant une pluralité de premières cavités sur une surface périphérique, et la pluralité de premières cavités logeant et retenant une pluralité d'articles ;
un deuxième rouleau de refroidissement (103b), le deuxième rouleau de refroidissement comprenant une pluralité de deuxièmes cavités sur une surface périphérique, et la pluralité de deuxièmes cavités logeant et retenant une pluralité d'articles transférés depuis le premier rouleau de refroidissement, et la pluralité de deuxièmes cavités dans le deuxième rouleau de refroidissement correspondant à la pluralité de premières cavités dans le premier rouleau de refroidissement, et la pluralité de deuxièmes cavités dans le deuxième rouleau de refroidissement et la pluralité de premières cavités dans le premier rouleau de refroidissement étant agencées de manière à être en face les unes des autres ;
une première machine (106a) pour produire un premier film fondu (105) et appliquer le premier film fondu sur la pluralité d'articles maintenus dans la pluralité de premières cavités dans le premier rouleau de refroidissement afin de recouvrir partiellement la pluralité d'articles avec le premier film fondu ;
une deuxième machine (106b) pour produire un deuxième film fondu (108) et appliquer le deuxième film fondu sur la pluralité d'articles partiellement revêtus transférés du premier rouleau de refroidissement vers le deuxième rouleau de refroidissement et maintenus dans la pluralité de deuxièmes cavités dans le deuxième rouleau de refroidissement afin de former une pluralité d'articles revêtus ; et
un mécanisme d'alimentation pour alimenter la pluralité d'articles vers le premier rouleau de refroidissement ; et un mécanisme de collecte pour collecter la pluralité d'articles revêtus à partir du deuxième rouleau de refroidissement ;
chaque article revêtu parmi la pluralité d'articles revêtus collectés à partir du deuxième rouleau de refroidissement comporte un revêtement du premier film polymère sur un côté de l'article revêtu et du deuxième film polymère sur un côté opposé de l'article revêtu, de sorte que chaque article parmi la pluralité d'articles est encapsulé à l'intérieur du premier film polymère et du deuxième film polymère.

2. Le système selon la revendication 1, dans lequel le deuxième rouleau de refroidissement est identique au premier rouleau de refroidissement.

3. Le système selon la revendication 1 ou la revendication 2, dans lequel le deuxième rouleau de refroidissement est placé sur un côté du premier rouleau de refroidissement ou le deuxième rouleau de refroidissement est placé sur un côté inférieur du premier rouleau de refroidissement.

4. Le système selon l'une quelconque des revendications précédentes, dans lequel chacun parmi le premier film fondu et le deuxième film fondu présente une épaisseur, une largeur et des propriétés chimiques souhaitées, et dans lequel la première machine et la deuxième machine comprennent chacune une extrudeuse de polymère et une filière de moulage de film, et dans lequel chaque extrudeuse de polymère mélange, fait fondre et extrude un polymère pour générer une masse fondue homogène de polymère, chaque filière de moulage de film étant fixée à une extrémité d'une extrudeuse de polymère respective pour recevoir une alimentation fondue provenant de l'extrudeuse de polymère afin de produire un film fondu d'épaisseur et de largeur souhaitées.

5. Le système selon l'une quelconque des revendications précédentes, dans lequel les articles de la pluralité d'articles encapsulés sont des articles à libération contrôlée.

6. Le système selon l'une quelconque des revendications précédentes, dans lequel le polymère est un polymère unique ou un mélange de polymères, et le premier film polymère et le deuxième film polymère comprennent une couche polymère unique ou une pluralité de couches polymères.

7. Le système selon l'une quelconque des revendications précédentes, dans lequel la pluralité d'articles est choisie parmi un groupe comprenant un engrais, un comprimé pharmaceutique, un comprimé détergent, un comprimé biocide, un granulé pesticide, un aliment pour animaux et une particule alimentaire.

8. Le système selon l'une quelconque des revendications précédentes, comprenant en outre un mécanisme de coupe prévu au niveau du premier rouleau de refroidissement et du deuxième rouleau de refroidissement pour couper le premier film polymère et le deuxième film polymère après application sur la pluralité d'articles, et dans lequel le mécanisme de coupe est un tranchant prévu sur la surface du premier rouleau de refroidissement et du deuxième rouleau de refroidissement.

9. Le système selon l'une quelconque des revendications précédentes, dans lequel la pluralité de premières cavités et la pluralité de deuxièmes cavités comprennent une ouverture ou un trou dans un fond pour fournir le vide destiné à maintenir la pluralité d'articles.

10. Le système selon l'une quelconque des revendications précédentes, dans lequel la pluralité de premières cavités et la pluralité de deuxièmes cavités comprennent un anneau de rembourrage compressible dans un fond, et dans lequel l'anneau de rembourrage est constitué d'un matériau choisi parmi un groupe comprenant un matériau en caoutchouc souple ou un matériau similaire au caoutchouc.

11. Le système selon l'une quelconque des revendications précédentes, dans lequel le polymère est traité par fusion pour former un film fondu d'épaisseur souhaitée.

12. Le système selon l'une quelconque des revendications précédentes, dans lequel l'épaisseur souhaitée du premier film polymère et du deuxième film polymère est comprise dans une gamme allant de 5 microns à 300 microns.

13. Un article d'engrais enrobé de polymère, l'article comprenant :
un granule d'engrais (101), le granule ayant une surface ;
un premier film polymère (105) qui recouvre une première partie de la surface du granule et permet à l'engrais contenu dans le granule de se diffuser à travers le film au fil du temps ; et
un deuxième film polymère (108) qui recouvre une deuxième partie de la surface du granule que le premier film polymère ne recouvre pas et permet à l'engrais contenu dans le granule de se diffuser à travers le film au fil du temps ;
le premier film polymère comprend une première zone de chevauchement dans laquelle le premier film polymère est fusionné par fusion avec le deuxième film polymère afin de sceller le premier film polymère et le deuxième film polymère et d'encapsuler le granule entre les deux films polymères ;
le deuxième film polymère comprend une deuxième zone de chevauchement dans laquelle le deuxième film polymère est fusionné par fusion avec le premier film polymère ; et
la première zone de chevauchement et la deuxième zone de chevauchement ont ensemble une épaisseur uniforme par rapport à l'épaisseur du premier film polymère qui recouvre la première partie de la surface du granule et à l'épaisseur du deuxième film polymère qui recouvre la deuxième partie de la surface du granule.

14. Un procédé pour revêtir une pluralité d'articles dans un processus continu utilisant un polymère fondu, le procédé comprenant
le fait d'extruder et d'appliquer une première couche de revêtement avec un premier film polymère fondu sur une pluralité d'articles maintenus sur une pluralité de premières cavités dans un premier rouleau de refroidissement afin de générer une pluralité d'articles partiellement revêtus par le premier film polymère ;
le fait de transférer la pluralité d'articles partiellement revêtus par le premier film polymère du premier rouleau de refroidissement vers un deuxième rouleau de refroidissement ;
le fait d'exposer une partie non revêtue de la pluralité d'articles partiellement revêtus du premier film polymère ;
le fait d'extruder et d'appliquer une deuxième couche de revêtement d'un deuxième film polymère fondu sur la pluralité d'articles maintenus sur une pluralité de deuxièmes cavités dans le deuxième rouleau de refroidissement, générant une pluralité d'articles entièrement revêtus du premier film polymère et du deuxième film polymère ;
le fait d'encapsuler la pluralité d'articles entre la première couche de revêtement et la deuxième couche de revêtement en scellant le premier film polymère et le deuxième film polymère revêtant la pluralité d'articles par fusion à chaud du deuxième film polymère avec le premier film polymère sur une zone de chevauchement du premier film polymère et du deuxième film polymère, et la pluralité d'articles encapsulés étant libérés sur une période de temps par une diffusion de la pluralité d'articles encapsulés à travers le premier film polymère ou le deuxième film polymère ;
la pluralité d'articles étant maintenus dans la pluralité de premières cavités et dans la pluralité de deuxièmes cavités par une aspiration sous vide appliquée au fond de la pluralité de premières cavités et à la pluralité de deuxièmes cavités, et une force de traction de l'aspiration sous vide sous la pluralité d'articles étant adaptée pour tirer le premier film polymère et le deuxième film polymère autour de la pluralité d'articles et pour faire adhérer le premier film polymère et le deuxième film polymère respectivement à une surface opposée de la pluralité d'articles.
